# NEW EUROPEAN PATENT SPECIFICATION

(11) **EP 0 812 099 B2**
(45) Date of publication and mention of the opposition decision: **11.01.2006**
(45) Mention of the grant of the patent: 24.07.2002
(21) Application number: 97108572.5
(22) Date of filing: 28.05.1997
(51) Int. Cl.: H04N 1/00

(54) **Method for sending documents through electronic-mail and system thereof**
Verfahren und System zur Übertragung von Dokumenten mittels elektronischer Post
Procédé et système pour la transmission de documents par courrier électronique

(30) Priority: 05.06.1996 IT TO960498
(43) Date of publication of application: 10.12.1997
(73) Proprietor: Olivetti Tecnost S.p.A., 10015 Ivrea (TO) (IT)
(72) Inventor: Tavarelli, Mario, 10015 Ivrea (IT); Delaurenti, Severino, 10081 Castellamonte (IT)
(74) Representative: Koch, Thomas

(56) References cited:
- EP-A- 0 503 398
- EP-A- 0 615 377
- WO-A-94/03994
- US-A- 5 473 758
- PATENT ABSTRACTS OF JAPAN vol. 096, no. 007, 31 July 1996 & JP 08 065343 A (NEC CORP), 8 March 1996
- PATENT ABSTRACTS OF JAPAN vol. 096, no. 002, 29 February 1996 & JP 07 274108 A (FUJI PHOTO FILM CO LTD), 20 October 1995
- DATA SHEET OF APPLE COLOR ONESCANNER 600/27

## Description

Field of the invention - The method according to this invention may be used for sending (and correspondingly also for receiving) a document produced on a physical medium (generally a sheet of paper) to a remote correspondent, by means of an electronic mail system using the "InterNet" network to connect sender and receiver.

Related technological art - EP615377 describes that a facsimile message is sent to a facsimile delivery system. This facsimile delivery system is connected to a public network and delivers the facsimile message to the intended recipient by an electronic mail system.

Application programs are widely known in the sector art capable of running under both a 16-bit and 32-bit Operating System, that enable a fax machine connected to a Personal Computer (abbreviated PC hereinbelow) through a known type parallel communication port, for example, to become a multifunctional product, where the same machine may also be used as a graphic printer or as a scanner.

One example of such a program is the software communication module LinkFax© produced by Olivetti Lexikon®, and commercially available for the Microsoft®, 16-bit Operating System Windows™ 3.1, well-known to those acquainted with the sector art.

Equally well-known are the application programs for Personal Computer that enable electronic mail, or more usually "E-mail", messages to be exchanged between two PC's, both equipped with a modem and connected both to the common telephone circuit and also to either an ISDN ("Integrated Services Digital Network") or a LAN ("Local Area Network"), availing of the InterNet network (all known networks), so that the cost is equivalent solely to that of the link between the sender and the provider of the Internet hook-up service (known as an "InterNet Provider"). Accordingly, even when sending a message to a correspondent on the other side of the Atlantic, cost of sending the message is simply that of the local telephone call.

With the most sophisticated electronic mail programs known in the art provided with MAPI support ("Message Application Program Interface"), examples being Eudora Pro™, Microsoft Mail™, Internet Explorer™, Netscape Navigator™, etc., a file (understood as a unitary set of inter-related digital data), stored on diskette or the hard-disk of a PC, may automatically be "attached" to the message being sent so that the full message, in addition to the text true and proper, will also comprise one or more attachments.

However, when the attachment to be sent with an electronic mail message is a document available only on a physical medium (for example, a drawing on a sheet of paper, a wiring diagram on copying paper, a geographical map, etc.), rather than a file already available in digital form, it is necessary to dispose of an array of dedicated equipment and application programs and perform a succession of operations, as illustrated below:
a) feed the document into a scanner and obtain a digitized representation thereof (the "bit map"),
b) capture the said digitized representation on a PC and, using a suitable application program, apply a conversion/compression algorithm thereto in order to convert the "bit map" to a graphic file according to one of the known standards (for example, Zsoft, TIFF, JPEG, WordPerfect™, etc.),
c) memorize the said graphic file in an archive "folder" on the hard disk of the PC or on a diskette and shut down the previously mentioned application program,
d) run an electronic mail program on the PC that permits attachment of files,
e) type the electronic mail address of the correspondent, write the text of the message, and call up the memorized graphic file as an attachment,
f) command sending of the duly composed message to the InterNet.

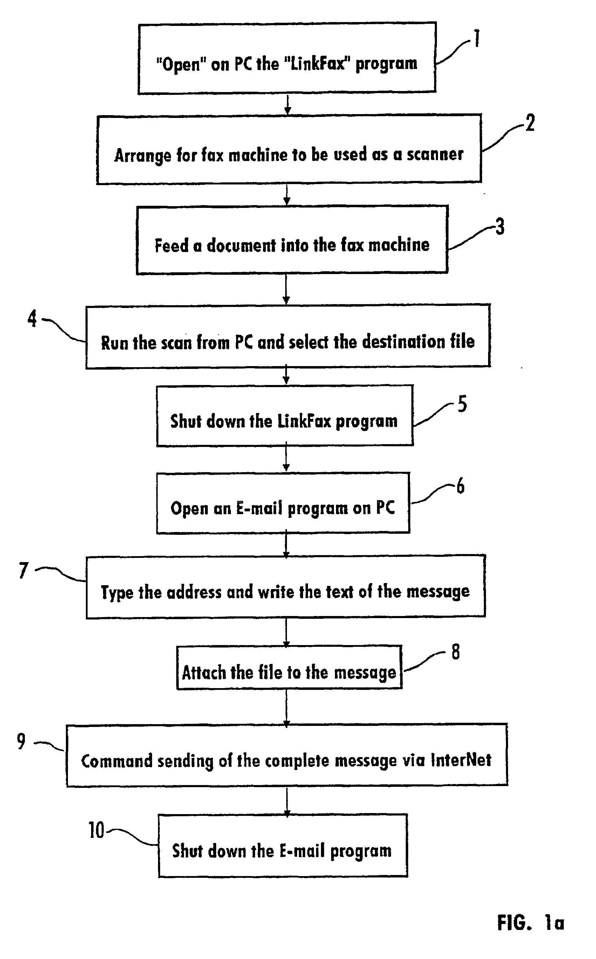

A scanner is an item of equipment still relatively little used in typical office work environments. Much more common in these environments is a fax machine provided with parallel communication port connected to a PC. in this case, the operations that the sender of the above-mentioned message has to perform in order to produce the same result are as follows, illustrated below with reference to Fig. 1a, in which:
- step 1 consists in starting on the PC an application program for multifunctional handling of the fax machine, for example though not exclusively, the previously cited LinkFax© application;
- step 2 consists in arranging with the above-mentioned program for the fax machine to be used as a scanner,
- step 3 consists in feeding the document into the fax machine working in scanner mode to obtain a digitized representation thereof (the "bit map");
- step 4 consists in running on the PC the command for performing scanning of the document and selecting the file of destination for the digitized representation, defining the path, name and graphic format, selected from the numerous, industry standard formats available,
- step 5 consists in shutting down the previously mentioned application program (LinkFax©),
- step 6 consists in starting on the PC an electronic mail program permitting attachment of files, for example but not exclusively, the Eudora Pro™ program, the Microsoft Mail™ program, the Internet Explorer™ program, or the Netscape Navigator™ program,
- step 7 consists in opening the relative "page" for creation of a new message and in typing the electronic mail address of the correspondent and, where applicable, in writing the text of the message, though this may not be necessary in cases where all the information intended to be sent to the correspondent is contained in the document itself,
- step 8 consists in calling up the memorized graphic file corresponding to the document and in adding it as an attachment to the message,
- step 9 consists in commanding sending of the duly composed message to the communication network the PC is connected to, typically though not exclusively, the InterNet, or a telephone circuit, or an IS-DN network, or possibly a LAN,
- step 10 consists in shutting down the electronic mail program started in previous step 6.

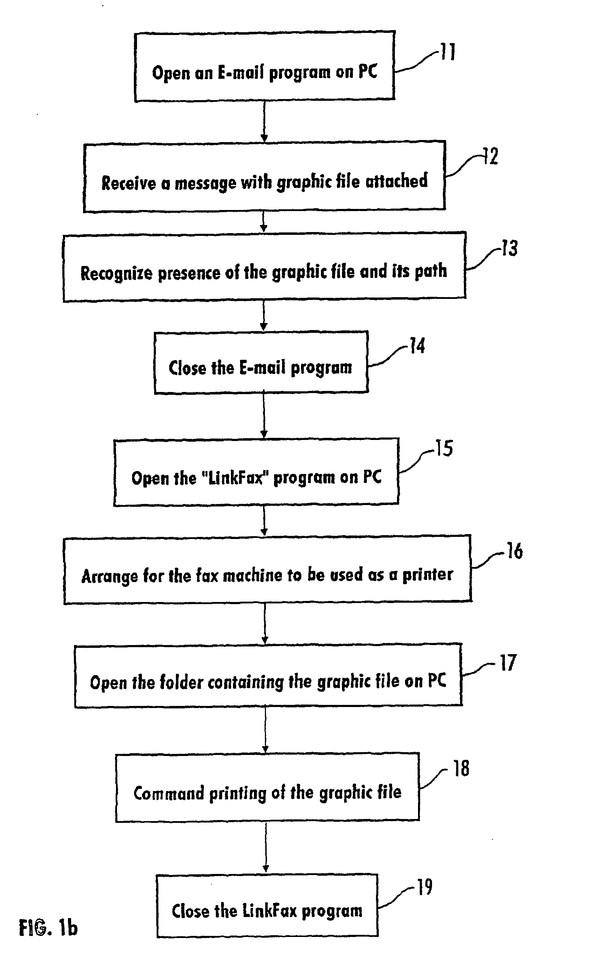

By the same token, the mirror-image result of receiving the above-described message is obtained at the receiver end with the following succession of operations, illustrated with reference to Fig. 1b, in which:
- step 11 consists in starting on PC one of the electronic mail programs cited in previous step 6,
- step 12 consists in receiving the message with attached graphic file, of the same type as those cited in previous step 4,
- step 13 consists in the operator recognizing presence of the graphic file attachedto the message and its path (address of the folder wherein it has been stored),
- step 14 consists in shutting down the electronic mail program started in previous step 11,
- step 15 consists in starting on PC an application program for multifunctional handling of the fax machine, for example though not exclusively, the previously cited LinkFax© application,
- step 16 consists in arranging for the fax machine to be used as a printer,
- step 17 consists in opening on PC the folder wherein the graphic file attached to the message has been memorized,
- step 18 consists in sending the fax machine the command to print the graphic file, and
- step 19 consists in shutting down the application program (LinkFax©) opened in previous step 15.

It will be obvious that both of the sequences of operations described in the foregoing are long and complex, requiring numerous interventions from an operator which consequently contain the risk of error and are time-consuming.

Summary of the invention - The purpose of the present invention is to define a method that enables sending of a document produced on a physical medium (typically a sheet of paper) to a remote correspondent, through an electronic mail system using the "InterNet" network to connect sender and receiver, in a simple and automatic way, with minimal intervention from an operator and hence with a risk of error that is practically nil.

A further object of this invention is to define a method that enables reception and printing of the same document, again in a simple and automatic way.

The objects are obtained by means of an appropriate application program commanding execution in the proper order of at least part of the previously listed operations, so that operator intervention is substantially limited to the starting and concluding steps of the whole process of sending a document by electronic mail on the InterNet. The invention in its broadest aspects is defined in claims 1, 9, 12 and 14.

These and other scopes, characteristics and advantages of the invention will become apparent in the course of the following description of a preferred embodiment, provided by way of a non-comprehensive example, taken in conjunction with the accompanying drawings.

### BRIEF DESCRIPTION OF DRAWINGS

Fig. 1a - Is a schematic representation of the flow of operations involved in sending a document by electronic mail, according to a known method.
Fig. 1b - Is a schematic representation of the flow of operations involved in receiving a document by electronic mail and printing the same, according to a known method.
Fig. 2 - Is a schematic representation of the flow of operations involved in sending a document by electronic mail, according to the method of the invention.

### DESCRIPTION OF THE PREFERRED EMBODIMENT

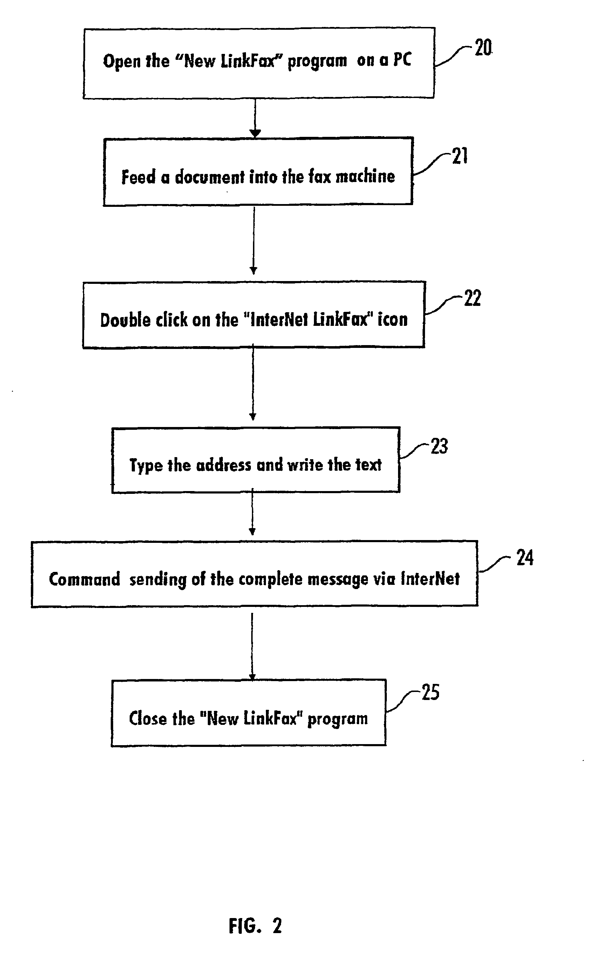

Fig. 2 illustrates the method according to this invention for the sending to an electronic mail address of a document attached to a message. As in the known art described previously, the method is based on the use of a fax machine selectively connectable to a Personal Computer through an interface, where the interface, conforming to the known industry standards, may be of either the serial or parallel type, and the fax machine may be of eitherthe treated paper type (used when printing with the thermal printing technology), or plain paper type (used when printing with the ink-jet technology or the electrophotographic or laser technology).

The Personal Computer is selectively connectable to a communications network and disposes of an Operating System, typically though not exclusively, the Microsoft® 32-bit Windows 95™ Operating System and a given application program, identified in the example illustrated as the "New LinkFax" to signify that, in addition to the features offered by the LinkFax© program described previously, it also possesses further features that will be described later and are essential for application of the method according to this invention.

The above-mentioned communications network could most typically be the Internet, accessed through a normal telephone line, or through a LAN or ISDN network

With reference to Fig. 2, the steps involved in the method according to the invention are as follows:
- step 20 consists in starting on a PC the "New LinkFax" application program. This step may even be performed automatically when the Operating System is started, in which case the program "running" status will be signalled by a minimized icon in the TNA ("Task-bar Notification Area"),
- step 21 consists in feeding the document into the fax machine,
- step 22 consists in starting the special functions of a given subprogram, identified as "LinkFax InterNet" in the example illustrated, for sending the documentmentioned in previous step 21 to an electronic mail address, as an attachment to a message. This start command may be given, for example, by using a "mouse" to set a pointer on afirst, given icon and then double clicking with the left button of the mouse, or it may also be given using any of the various other methods known in the art, for example by pressing a combination of one or more keys on the keyboard of the PC,
- step 23 consists in typing, using the keyboard of the PC for example, the electronic mail address of the correspondent for whom the message is intended, according to a known standard format, in an appropriate area of a window on the screen of the PC, and in writing as desired a text of the message whereto the document of step 21 is an attachment,
- step 24 consists in commanding sending of the complete message (text+attachment) to the correspondent via the communications network whereto the PC is connected, for example using the "mouse" to set the pointer on a second given icon (which could, for example, represent the word "Send") and then clicking once with the left button of the same mouse,
- step 25 consists in exiting from the application, shutting down the "LinkFax Internet" subprogram and the "New LinkFax" program, or alternatively leaving the latter program running in reception only.

Simplicity of the method described above with respect to the methods known in the art is immediately obvious and is the result of the additional features of the "New LinkFax" program with respectto, for example, the known program LinkFax©. These features include the ability of the "InterNet LinkFax" subprogram, once it has started running, to independently perform a series of operations logically comprised within the preceding steps 22 and 23, most notable among which are the following:
- recognition that a document (comprising one or more pages) has been inserted in the fax machine,
- arranging for the fax machine to work as a scanner, simultaneously defining scanning resolution on the basis of a predefined setting, for example though not exclusively, at a value of 100X100, 200X100, 200X200, 200X300, 300X300, 200X400, or 400X400 dots per inch, and also contrast and definition of grey shades.
- sending of the command to "run" scanning of all the pages of the document,
- automatically selecting the destination file for the digitized representation of the document, defining, on the basis of a predefined setting, its path, name and graphic format selected from among the many, known industry standards available, such as, for example though the list is not comprehensive, the Zsoft format, the Bitmap format, the TIFF format, the WinFax™ format, the FAX format, the JPEG format, the Lead CMP format, the TARGA™ format, the Portable Network Graphics™ format, the Windows Metaflie™ format, the MacPaint™ format or the WordPerfect™ format,
- starting on PC an electronic mail program enabling the attachment of files on the basis of a predefined setting, for example though the list is not comprehensive, the Eudora Pro™ program, the Microsoft Mail™ program, the Internet Explorer™ program, or the Netscape Navigator™ program and opening the "page" for creation of a new mail message,
- calling up the memorized graphicfile corresponding to the document and adding it as an attachment to the message (entry of the name/path of the graphic file in the message attachment box).

The "New LinkFax" program, if left running with the "LinkFax Internet" subprogram closed, also enables reception and automatic printing of messages with graphic file attached transmitted by a sender also using the "New LinkFax" program, in fully transparent manner for the operator, namely without intervention from the latter. The program in fact independently also performs the following operations:
- in transmission, the creation of an identifier for the mail message sent, for example by having the "Subject" field of the message obligatorily begin with the word "Linkfax",
- in reception, starting on PC of the previously quoted electronic mail program, in "receive" mode,
- polling according to a selectively predetermined time frequency for incoming messages transmitted by a sender using the "New LinkFax" program, recognized as in the above example by the word "Linkfax" at the beginning of the "Subject" field of the message,
- after detection of a message transmitted by a sender using the "New LinkFax" program, activating the fax machine as a printer, or alternatively activating a printer connected to the PC where the fax machine is not ready or unavailable,
- commanding printing according to predefined parameters of the graphic file attached to the message.

As further optional possibilities in addition to those already described, the "New LinkFax" program, subject to appropriate presetting, may also automatically perform the following operations:
- label the above-mentioned message "read",
- delete the message, after it has been read, and the associated graphic file, after it has been printed, from the folders wherein they were memorized.

Naturally it is possible to make changes to the method according to the invention described above, without departing from the scope of the invention.

In short, without prejudice to the principle of the present invention, the construction details and forms of embodiments described and illustrated in the foregoing may undergo a wide variety of changes, without departing from the scope of the invention.

## Claims

1. A method for sending to an electronic mail address a document attached to a message,
using a fax machine operable as a scanner and selectively connectable to a Personal Computer through an interface, said Personal Computer provided with an input device and a screen and in turn being selectively connectable to a communications network and disposing of an Operating System,
an electronic mail program
suitable to send messages with attachments and
an application program (New LinkFAX; LinkFax InterNet) associated with said electronic mail program,
said method comprising the steps of:
**step 21:** feeding (21) said document into said fax machine,
**step 20:** starting (20) said application program (New LinkFAX) on said Personal Computer,
**step 22:** starting (22) the special functions of a subprogram (LinkFax InterNet) of said application program (LinkFax) for sending the document mentioned in step 21 to an electronic mail address as an attachment to a message through said electronic mail program,
**step 23**: typing (23), using the input device of said Personal Computer, said electronic mail address in an appropriate area of a window on the screen of said Personal Computer, and writing a text of said message whereto the document of step 21 is an attachment, and
**step 24:** enabling (24) said application program to perform sending of said message to said electronic mail address on said communications network,
wherein said application program subprogram (LinkFax InterNet) also performs, logically within the preceding steps 22 and 23, the steps of:
having said document scanned by said fax machine with a determined definition to produce a graphic file representative of said document having a determined format, including:
- recognition that a document comprising one or more pages has been inserted in the fax machine,
- arranging the fax machine to work as a scanner and simultaneously defining a scanning resolution on the basis of a predefined setting,
- sending a command to "run" scanning of all the pages of the document; and
- automatically selecting the destination file for the digitised representation of the document, defining, on the basis of a predefined setting, its path, name and said graphic format, and
attaching said graphic file to said message during said sending of said message to said electronic mail address.

2. A method as defined in claim 1, **characterized by** the fact that said fax machine is ink-jet printing type.

3. A method as defined in claim 1, **characterized by** the fact that said fax machine is electrophotographic printing type.

4. A method as defined in claim 1, **characterized by** the fact that said interface is parallel type.

5. A method as defined in claim 1, **characterized by** the fact that said interface is serial type.

6. A method as defined in claim 1, **characterized by** the factthat said communications network is selected from a group comprising a telephone network, an ISDN network, a LAN network and an InterNet network.

7. A method as defined in claim 1, **characterized by** the fact that said determined definition is selected from a group comprising definitions of 100X100, 200X100, 200X200, 200X300, 300X300, 200X400, and 400X400 dots per inch.

8. A method as defined in claim 1, **characterized by** the fact that said format of said graphic file is selected from a group comprising a Zsoft format, a Bitmap format, a TIFF format, a WinFax format, a FAX format, a JPEG format, a Lead CMP format, a TARGA format, a Portable Network Graphics format, a Windows Metafile format, a MacPaint format and a WordPerfect format.

9. A system for sending to an electronic mail address a document attached to a message, said system including:
- a Personal Computer selectively connectable to a communications network and provided with an input device and a screen,
said input device being adapted for typing (23) said electronic mail address in an appropriate area of a window on the screen of said Personal Computer, and writing a text of said message, and
said Personal Computer disposing of an Operating System,
an electronic mail program
suitable to send messages with attachments, and
an application program (New LinkFAX; LinkFax InterNet), including special functions of a subprogram (LinkFax InterNet) for sending a document to an electronic mail address as an attachment to a message through said electronic mail program, that performs, following a start command a succession of steps, and
- a fax machine operable as a scanner for scanning a document fed thereto and selectively connectable through an interface to said Personal Computer,
wherein said succession of steps performed by said application program (New LinkFAX; LinkFax Internet) comprises,
following a step 20 of starting (20) said application program (New LinkFAX) on said Personal Computer, a step 22 of starting (22) the special functions of said subprogram (LinkFax InterNet), a step 23 of typing (23) said electronic mail address and writing said text of said message and a step 24 of enabling (24) said application program to perform sending of said message to said electronic mail address on said communications network,
the steps performed, logically within the preceding steps 22 and 23, by said application program subprogram (LinkFax InterNet) of:
having said document scanned by said fax machine with a determined definition to produce a graphic file representative of said document having a determined format, including:
- recognition that a document comprising one or more pages has been inserted in the fax machine,
- arranging the fax machine to work as a scanner and simultaneously defining a scanning resolution on the basis of a predefined setting,
- sending a command to "run" scanning of all the pages of the document; and
- automatically selecting the destination file for the digitised representation of the document, defining, on the basis of a predefined setting, its path, name and said graphic format, and
attaching said graphic file to said message during said sending of said message to said electronic mail address.

10. A system as defined in claim 9, **characterized by** the fact that said fax machine is ink-jet printing type.

11. A system as defined in claim 9, **characterized by** the fact that said fax machine is electrophotographic type.

12. A method for reproducing on a medium a document received as a graphic file having a determined format attached to an electronic mail message,
using a fax machine operable as a printer and selectively connectable to a Personal Computer through an interface,
said Personal Computer in turn being selectively connectable to a communications network and disposing of an Operating System,
an electronic mail program suitable to receive messages with attachments, and
an application program (New LinkFAX InterNet) associated with said electronic mail program,
said method comprising the steps of:
- starting said electronic mail program in receive mode,
- starting said application program; and
- feeding said medium into said fax machine;
wherein said application program performs the steps of:
- polling according to a selectively predetermined time frequency for arrival of a message with an identifier identifying the application program used in transmission;
- detecting said message by recognizing said identifer;
- activating the fax machine as a printer;
- recognizing and selecting said graphic file attached to said message, and
- having said document printed on said medium by said fax machine with a determined definition, from said graphic file representative of said document.

13. A method as defined in claim 12, **characterized by** the fact that said communications network is selected from a group comprising a telephone network, an ISDN network, a LAN network and an InterNet network.

14. A system for reproducing on a medium a document received as a graphic file having a determined format attached to an electronic mail message, said system including:
- a Personal Computer selectively connectable to a communications network, said Personal Computer disposing of an Operating System,
an electronic mail program suitable to receive messages with attachments and
an application program (New LinkFAX; LinkFax InterNet) associated with said electronic mail program which performs, following a start command, a succession of steps, and
- a fax machine operable as a printer selectively connectable through an interface to said Personal Computer,
wherein said succession of steps performed by said application program comprises following a starting of said electronic mail program in receive mode, a starting of said application program, and feeding said medium into said fax machine, the steps of:
- polling according to a selectively predetermined time frequency for arrival of a message with an identifier identifying the application program used in transmission,
- detecting said message by recognizing said identifier
- activating the fax machine as a printer;
- recognizing and selecting said graphic file attached to said message, and
- having said document printed on said medium by said fax machine with a determined definition, from said graphic file representative of said document.

15. A system as defined in claim 14, **characterized by** the fact that said communications network is selected from a group comprising a telephone network, an ISDN network, a LAN network and an InterNet network.

## Patentansprüche

1. Verfahren zum Senden eines Dokuments, das an eine Nachricht angehängt ist, an eine Emailadresse, unter Verwendung eines Faxgerätes, das als Scanner betreibbar ist und das wahlweise an einen PC über eine Schnittstelle anschließbar ist, wobei der PC mit einem Eingabegerät und einem Bildschirm ausgestattet ist und wiederum wahlweise an ein Übertragungsnetzwerk anschließbar ist, und zum Vorsehen eines Betriebssystems, eines Email-Programms, welches zum Senden von Nachrichten mit Anhängen geeignet ist, und eines Anwenderprogramms (New LinkFAX; LinkFax InterNet), welches mit dem Email-Programm verknüpft ist, wobei das Verfahren die Schritte aufweist:
Schritt 21: Einführen (21) des Dokuments in das Faxgeräts,
Schritt 20: Starten (20) des Anwenderprogramms (New LinkFAX) auf dem PC,
Schritt 22: Starten (22) der speziellen Funktionen eines Unterprogrammes (LinkFax InterNet) des Anwenderprogramms (LinkFax) zum Senden des in Schritt 21 erwähnten Dokumentes an eine Emailadresse als ein Anhang an eine Nachricht durch das Email-Programm,
Schritt 23: Eingeben (23), unter Verwenden des Eingabegerätes des PCs, der Emailadresse in einer passenden Fläche eines Fensters auf dem Bildschirm des PCs und Schreiben eines Textes der Nachricht, zu welcher das Dokument von Schritt 21 ein Anhang ist, und
Schritt 24: Aktivieren bzw. Ermächtigen (24) des Anwenderprogramms zum Durchführen eines Sendens der Nachricht an die Emailadresse über das Übertragungsnetzwerk,
wobei das Unterprogramm (LinkFax InterNet) des Anwenderprogramms auch die folgenden Schritte durchführt, logisch innerhalb der vorhergehenden Schritte 22 und 23:
Scannen des Dokuments durch das Faxgerät mit einer bestimmten Auflösung, um eine Bilddatei zu erzeugen, die das Dokument in einem bestimmten Format darstellt, einschließlich:
- Erkennen, dass ein eine oder mehrere Seiten umfassendes Dokument in das Faxgerät eingeführt worden ist,
- Einrichten des Faxgeräts, um als Scanner zu arbeiten, und gleichzeitig Definieren einer Scan-Auflösung auf der Basis einer vordefinierten Einstellung,
- Senden eines Befehl zum "Durchlaufen" des Scannens sämtlicher Seiten des Dokumentes; und
- Automatischem Auswählen der Zieldatei für die digitalisierte Darstellung des Dokumentes, Definieren, auf der Basis von einer vordefinierten Einstellung, ihres Pfades, Namens und des Grafik-Formats, und
Anhängen der Bilddatei an die Nachricht während des Sendens der Nachricht an die Emailadresse.

2. Verfahren nach Anspruch 1, **dadurch gekennzeichnet, dass** das Faxgerät vom Tintenstrahldruck-Typ ist,

3. Verfahren nach Anspruch 1, **dadurch gekennzeichnet, dass** das Faxgerät vom elektrophotographischen Drucktyp ist.

4. Verfahren nach Anspruch 1, **dadurch gekennzeichnet, dass** die Schnittstelle eine parallele Schnittstelle ist.

5. Verfahren nach Anspruch 1, **dadurch gekennzeichnet, dass** die Schnittstelle eine serielle Schnittstelle ist.

6. Verfahren nach Anspruch 1, **dadurch gekennzeichnet, dass** das Übertragungsnetzwerk aus einer ein Telefonnetzwerk, ein ISDN-Netzwerk, ein LAN-Netzwerk und ein InterNet-Netzwerk umfassenden Gruppe ausgewählt wird.

7. Verfahren nach Anspruch 1, **dadurch gekennzeichnet, dass** die bestimmte Auflösung aus einer Auflösungen von 100x100, 200x100, 200x200, 200x300, 300x300, 200x400 und 400x400 Punkte/inch umfassenden Gruppe ausgewählt wird.

8. Verfahren nach Anspruch 1, **dadurch gekennzeichnet, dass** das Format der Bilddatei aus einem Satz, bestehend aus einem Zsoft-Format, einem Bitmap-Format, einem TIFF-Format, einem WinFax-Format, einem FAX-Format, einem JPEG-Format, einem Lead CMP-Format, einem TAGRA-Format, einem Portable Network Graphics-Format, einem Windows-Metafile-Format, einem MacPaint-Format und einem WordPerfect-Format, ausgewählt wird.

9. Vorrichtung zum Senden eines Dokuments, das an eine Nachricht angehängt ist, an eine Emailadresse, wobei die Vorrichtung umfasst:
- einen PC, der wahlweise an ein Übertragungsnetzwerk anschließbar ist und der mit einem Eingabegerät und einem Bildschirm ausgestattet ist , wobei das Eingabegerät ausgebildet ist zum Eingeben (23) der Emailadresse in einer passenden Fläche eines Fensters auf dem Bildschirm des PCs und Schreiben eines Textes der Nachricht, und der PC mit einem Betriebssystems, einem Email-Programm, welches zum Senden von Nachrichten mit Anhängen geeignet ist, und einem Anwenderprogramm (New LinkFAX; LinkFax InterNet) versehen ist, einschließlich spezieller Funktionen zum Senden eines Dokumentes an eine Emailadresse als ein Anhang an eine Nachricht durch das Email-Programm, das folgend auf einen Startbefehl eine Folge von Schritten durchführt, und
- ein Faxgerät, das als Scanner zum Scannen eines dorthin zugeführten Dokumentes betreibbar ist und das wahlweise an einen PC über eine Schnittstelle anschließbar ist,
wobei die Folge von Schritten, die von dem Anwenderprogramm (New LinkFAX; LinkFax Internet) ausgeführt werden, die folgenden Schritte aufweist:
einem Schritt 20 eines Startens (20) des Anwenderprogramms (New LinkFAX) auf dem PC folgend, ein Schritt 22 eines Startens (22) der speziellen Funktionen des Unterprogramms (LinkFax Internet), ein Schritt eines Eingebens (23) der Emailadresse und Schreiben des Textes der Nachricht und einen Schritt 24 eines Aktivierens bzw. Ermächtigens (24) des Anwenderprogramms zum Durchführen eines Sendens der Nachricht an die Emailadresse über das Übertragungsnetzwerk,
wobei die Schritte, logisch innerhalb der vorhergehenden Schritte 22 und 23, die durch das Unterprogramm (LinkFax InterNet) des Anwenderprogramms durchgeführt werden, umfassen:
Scannen des Dokuments durch das Faxgerät mit einer bestimmten Auflösung, um eine Bilddatei zu erzeugen, die das Dokument in einem bestimmten Format darstellt, einschließlich:
- Erkennen, dass ein eine oder mehrere Seiten umfassendes Dokument in das Faxgerät eingeführt worden ist,
- Einrichten des Faxgeräts, um als Scanner zu arbeiten, und gleichzeitig Definieren einer Scan-Auflösung auf der Basis einer vordefinierten Einstellung,
- Senden eines Befehls zum "Durchlaufen" des Scannens sämtlicher Seiten des Dokumentes; und
- Automatischem Auswählen der Zieldatei für die digitalisierte Darstellung des Dokumentes, Definieren, auf der Basis von einer vordefinierten Einstellung, ihres Pfades, Namens und des Grafik-Formats, und
Anhängen der Bilddatei an die Nachricht während des Sendens der Nachricht an die Emailadresse.

10. Vorrichtung nach Anspruch 9, **dadurch gekennzeichnet, dass** das Faxgerät vom Tintenstrahldruck-Typ ist.

11. Vorrichtung nach Anspruch 9, **dadurch gekennzeichnet, dass** das Faxgerät vom elektrophotographischen Drucktyp ist.

12. Verfahren zum Reproduzieren eines Dokuments, das als eine an eine Email angehängte Bilddatei mit einem bestimmten Format empfangen wurde, auf ein Medium, unter Verwenden eines Faxgerätes, das als Drucker betreibbar ist und das wahlweise über eine Schnittstelle an einen PC anschließbar ist, wobei der PC wiederum wahlweise an ein Übertragungsnetzwerk anschließbar ist, und versehen ist mit einem Betriebssystems, einem Email-Programm, welches zum Empfangen von Nachrichten mit Anhängen geeignet ist, und einem Anwenderprogramm (New LinkFAX; LinkFax InterNet), welches mit dem Email-Programm verknüpft ist, wobei das Verfahren die Schritte aufweist zum:
- Starten des Email-Programms im Empfangsmodus,
- Starten des Anwenderprogramms, und
- Einführen des Mediums in das Faxgerät,
wobei das Anwenderprogramm die Schritte durchführt zum:
- Abfragen entsprechend einer ausgewählten vorgegebenen Zeitfrequenz des Eintreffens einer Nachricht mit einem das bei der Übertragung verwendete Anwenderprogramm identifizierenden Identifizierer,
- Detektieren der Nachricht durch Erkennen des Identifizierers,
- Aktivieren des Faxgerätes als ein Drucker,
- Erkennen und Auswählen der Bilddatei, die an die Nachricht angehängt ist, und
- Drucken des Dokuments auf dem Medium durch das Faxgerät mit einer bestimmten Auflösung aus der das Dokument darstellenden Bilddatei.

13. Verfahren nach Anspruch 12, **dadurch gekennzeichnet, dass** das Übertragungsnetzwerk aus einer ein Telefonnetzwerk, ein ISDN-Netzwerk, ein LAN-Netzwerk und ein InterNet-Netzwerk umfassenden Gruppe ausgewählt wird.

14. Vorrichtung zum Reproduzieren eines Dokuments, das als eine an eine Email angehängte Bilddatei mit einem bestimmten Format empfangen wurde, auf ein Medium, wobei die Vorrichtung umfasst:
- einen PC, der wahlweise an ein Übertragungsnetzwerk anschließbar ist, wobei der PC versehen ist mit einem Betriebssystems, einem Email-Programm, welches zum Empfangen von Nachrichten mit Anhängen geeignet ist, und einem Anwenderprogramm (New LinkFAX; LinkFax InterNet), welches mit dem Email-Programm verknüpft ist, welches einer Startanweisung folgend eine Folge von Schritten ausführt, und
- ein Faxgerät, das als Drucker betreibbar ist und wahlweise über eine Schnittstelle an den PC anschließbar ist,
wobei die Folge von Schritten, die von dem Anwenderprogramm ausgeführt werden, die folgenden Schritte aufweist, folgend einem Starten des Email-Programms im Empfangsmodus, einem Starten des Anwenderprogramms und Einführen des Mediums in das Faxgerät:
- Abfragen entsprechend einer ausgewählten vorgegebenen Zeitfrequenz des Eintreffens einer Nachricht mit einem das bei der Übertragung verwendete Anwenderprogramm identifizierenden Identifizierer,
- Detektieren der Nachricht durch Erkennen des Identifizierers,
- Aktivieren des Faxgerätes als ein Drucker,
- Erkennen und Auswählen der Bilddatei, die an die Nachricht angehängt ist, und
- Drucken des Dokuments auf dem Medium durch das Faxgerät mit einer bestimmten Auflösung aus der das Dokument darstellenden Bilddatei.

15. Vorrichtung nach Anspruch 14, **dadurch gekennzeichnet, dass** das Übertragungsnetzwerk aus einer ein Telefonnetzwerk, ein ISDN-Netzwerk, ein LAN-Netzwerk und ein InterNet-Netzwerk umfassenden Gruppe ausgewählt wird.

## Revendications

1. Procédé pour envoyer à une adresse de courrier électronique un document joint à un message,
en utilisant un télécopieur actionnable comme un scanner et connectable sélectivement à un Ordinateur Personnel grâce à une interface, ledit Ordinateur Personnel étant équipé d'un dispositif d'entrée et d'un écran et étant à son tour connectable sélectivement à un réseau de communications et disposant d'un Système d'Exploitation,
un programme de courrier électronique,
apte à envoyer des messages avec des pièces jointes, et
un programme d'application (New LinkFAX ; LinkFax InterNet) associé audit programme de courrier électronique,
ledit procédé comprenant les étapes consistant à :
étape 21 : introduire (21) ledit document dans ledit télécopieur,
étape 20 : lancer (20) ledit programme d'application (New LinkFAX) dans ledit Ordinateur Personnel,
étape 22 : activer (22) les fonctions spéciales d'un sous-programme (LinkFax InterNet) dudit programme d'application (LinKFax) pour envoyer le document mentionné à l'étape 21 à une adresse de courrier électronique comme pièce jointe à un message par l'intermédiaire dudit programme de courrier électronique,
étape 23 : saisir (23), en utilisant le dispositif d'entrée dudit Ordinateur Personnel, ladite adresse de courrier électronique dans une zone appropriée d'une fenêtre sur l'écran dudit Ordinateur Personnel, et écrire un texte dudit message auquel le document de l'étape 21 est une pièce jointe, et
étape 24 : activer (24) ledit programme d'application pour effectuer l'envoi dudit message à ladite adresse de courrier électronique sur ledit réseau de communications,
dans lequel ledit sous-programme (LinkFax Internet) du programme d'application effectue également, logiquement dans les étapes précédentes 22 et 23, les étapes de :
faire scanner ledit document par ledit télécopieur avec une définition déterminée pour produire un fichier graphique représentatif dudit document présentant un format déterminé, comprenant :
- la reconnaissance qu'un document comprenant une ou plusieurs pages a été inséré dans le télécopieur,
- la configuration du télécopieur pour qu'il fonctionne comme un scanner en définissant simultanément une résolution de la numérisation sur la base d'un paramètre prédéfini,
- l'envoi d'une commande d"'exécuter" en numérisant toutes les pages du document, et
- la sélection automatique du fichier de destination pour la représentation numérisée du document, en définissant, sur la base d'un paramétrage prédéfini, son trajet, son nom et ledit format graphique, et
joindre ledit fichier graphique audit message lors de l'envoi dudit message à ladite adresse de courrier électronique.

2. Procédé selon la revendication 1, **caractérisé en ce que** ledit télécopieur est du type à impression à jet d'encre.

3. Procédé selon la revendication 1, **caractérisé en ce que** ledit télécopieur est du type à impression électro-photographique.

4. Procédé selon la revendication 1, **caractérisé en ce que** ladite interface est de type parallèle.

5. Procédé selon la revendication 1, **caractérisé en ce que** ladite interface est de type série.

6. Procédé selon la revendication 1, **caractérisé par le fait que** le réseau de communication est sélectionné dans un groupe comprenant le réseau téléphonique, le réseau ISDN, le réseau local LAN et le réseau internet.

7. Procédé selon la revendication 1, **caractérisé en ce que** ladite définition déterminée est sélectionnée dans le groupe de définitions de 100X100, 200X100, 200X200, 200X300, 300X300, 200X400 et 400X400 points par pouce.

8. Procédé selon la revendication 1, **caractérisé en ce que** ledit format dudit fichier graphique est sélectionné dans le groupe comprenant le format Zsoft, le format Bitmap, le format TIFF, le format WinFax, le format FAX, le format JPEG, le format Lead CMP, le format TARGA, le format Portable Network Graphics, le format Windows Metafile, le format MacPaint et le format WordPerfect.

9. Système pour envoyer à une adresse de courrier électronique un document joint à un message, ledit système comprenant ;
- un Ordinateur Personnel connectable sélectivement à un réseau de communications et équipé d'un dispositif d'entrée et d'un écran,
ledit dispositif d'entrée étant adapté pour saisir (23) ladite adresse de courrier électronique dans une zone appropriée d'une fenêtre sur l'écran de l'Ordinateur Personnel et pour écrire un texte dudit message, et
un programme de courrier électronique apte à envoyer des messages avec des pièces jointes, et
un programme d'application (New LinkFAX, LinkFax InterNet), comprenant des fonctions spéciales d'un sous-programme (LinkFax InterNet) pour envoyer un document à une adresse de courrier électronique comme pièce jointe à un message grâce audit programme de courrier électronique, qui réalise, à la suite d'une commande de lancement, une succession d'étapes, et
- un télécopieur actionnable comme un scanner pour scanner un document qui lui est fourni et connectable sélectivement par l'intermédiaire d'une interface audit Ordinateur Personnel,
dans lequel ladite succession d'étapes réalisées par ledit programme d'application (New LinkFAX, LinkFax InterNet) comprend,
à la suite d'une étape 20 de lancement (20) dudit programme d'application (New LinkFAX) dans ledit Ordinateur Personnel, une étape 22 de lancement (22) des fonctions spéciales dudit sous-programme (LinkFax, InterNet), une étape 23 de saisie (23) dudit texte dudit message et une étape 24 pour activer (24) ledit programme d'application pour réaliser l'envoi dudit message à ladite adresse du courrier électronique sur ledit réseau de communication ;
les étapes effectuées, logiquement dans les étapes précédentes 22 et 23, par ledit sous-programme (LinkFax InterNet) de :
faire scanner ledit document par ledit télécopieur avec une définition déterminée pour produire un fichier graphique représentatif dudit document présentant un format déterminé, comprenant :
- la reconnaissance qu'un document comprenant une ou plusieurs pages a été inséré dans le télécopieur,
- la configuration du télécopieur pour qu'il fonctionne comme un scanner en définissant simultanément une résolution de la numérisation sur la base d'un paramètre prédéfini,
- l'envoi d'une commande d'"exécuter" en numérisant toutes les pages du document, et
- la sélection automatique du fichier de destination pour la représentation numérisée du document, en définissant, sur la base d'un paramétrage prédéfini, son trajet son nom et ledit format graphique, et
joindre ledit fichier graphique audit message lors de l'envoi dudit message à ladite adresse de courrier électronique.

10. Système selon la revendication 9, **caractérisé en ce que** ledit télécopieur est du type à impression à jet d'encre.

11. Système selon la revendication 9, **caractérisé en ce que** ledit télécopieur est du type à impression électro-photographique.

12. Procédé de reproduction sur un support d'un document reçu comme unfichier graphique, ayant un format déterminé, joint à un message de courrier électronique,
en utilisant un télécopieur actionnable comme une imprimante et connectable sélectivement grâce à une imprimante à un Ordinateur Personnel,
ledit Ordinateur Personnel étant à son tour connectable sélectivement à un réseau de communications et disposant d'un Système d'Opération,
un programme de courrier électronique apte à recevoir des messages avec des pièces jointes, et
un programme d'application (New LinkFAX InterNet) associé audit programme de courrier électronique,
ledit procédé comprenant les étapes de :
- lancer ledit programme de courrier électronique en mode réception ;
- lancer ledit programme d'application ; et
- introduire ledit milieu dans ledit télécopieur ;
dans lequel ledit programme d'application effectue les étapes de :
- rechercher, en fonction d'une fréquence temporelle sélectivement prédéterminée, l'arrivée d'un message avec un identificateur identifiant le programme d'application utilisé dans la transmission,
- détecter ledit message en reconnaissant ledit identificateur,
- activer le télécopieur comme une imprimante,
- reconnaître et sélectionner ledit fichier graphique joint audit message, et
- faire imprimer ledit document sur ledit support par ledit télécopieur, avec une définition déterminée à partir dudit fichier graphique représentatif dudit document.

13. Procédé selon la revendication 12, **caractérisé par le fait que** ledit réseau de communications est sélectionné dans un groupe comprenant la réseau téléphonique, le réseau ISDN, le réseau local LAN et le réseau Internet.

14. Système de reproduction sur une support d'un document reçu comme un fichier graphique, ayant un format déterminé, joint à un message de courrier électronique, ledit système comprenant :
- un Ordinateur Personnel connectable sélectivement à un réseau de communications, ledit Ordinateur Personnel disposant d'un Système d'Exploitation.
- un programme de courrier électronique apte à recevoir des messages avec des pièces jointes et
- un programme d'application (New LinkFAX, LinkFax InterNet) associé audit programme de courrier électronique qui réalise, à la suite d'une commande de lancement, un série d'étapes, et
- un télécopieur actionnable comme imprimante connectable sélectivement par l'intermédiaire d'une interface audit Ordinateur Personnel,
dans lequel ladite succession d'étapes effectuée par le dit programme d'application comprend à la suite d'un lancement dudit programme d'application et de l'alimentation dudit milieu dans ledit télécopieur, les étapes de :
- rechercher en fonction d'une fréquence temporelle sélectivement prédéterminée l'arrivée d'un message avec un identificateur identifiant le programme d'application utilisé dans la transmission,
- détecter ledit message en reconnaissant ledit identificateur,
- activer le télécopieur comme une imprimante,
- reconnaître et sélectionner ledit fichier graphique joint audit message, et
- faire imprimer ledit document sur ledit support par ledit télécopieur, avec une définition déterminée, à partir dudit fichier graphique représentatif dudit document.

15. Système selon la revendication 14, **caractérisé par le fait que** ledit réseau de communication est sélectionné dans un groupe comprenant le réseau téléphonique, le réseau ISDN, le réseau local LAN et le réseau Internet.
